# EUROPÄISCHE PATENTSCHRIFT

(11) **EP 3 408 323 B1**
(45) Veröffentlichungstag und Bekanntmachung des Hinweises auf die Patenterteilung: **11.12.2019**
(21) Anmeldenummer: 16782059.6
(22) Anmeldetag: 17.10.2016
(51) Int. Cl.: C08L 7/00, B60C 1/00, C08K 3/34, C08L 9/00, C08K 3/36, C08K 5/548, C08L 15/00

(54) **KAUTSCHUKMISCHUNG UND FAHRZEUGLUFTREIFEN**
RUBBER MIXTURE AND PNEUMATIC VEHICLE TIRE
MÉLANGE DE CAOUTCHOUC ET PNEUMATIQUE DE VÉHICULE

(30) Priorität: 26.01.2016 DE 102016201053
(43) Veröffentlichungstag der Anmeldung: 05.12.2018
(73) Patentinhaber: Continental Reifen Deutschland GmbH, 30165 Hannover (DE)
(72) Erfinder: RAJAN, Vipin, 30952 Ronnenberg (DE); FRANCKE, Martin, 30823 Garbsen (DE); SCHELLENBERG, Marion, 30171 Hannover (DE); SÁ, Catarina, 30916 Isernhagen (DE)
(74) Vertreter: Finger, Karsten
(86) Internationale Anmeldenummer: PCT/EP2016/074831
(87) Internationale Veröffentlichungsnummer: WO 2017/129276

(56) Entgegenhaltungen:
- WO-A1-2015/043902
- US-A1- 2011 077 343
- US-A1- 2011 144 236
- US-A1- 2012 252 952
- US-A1- 2014 171 556

## Beschreibung

Die Erfindung betrifft eine schwefelvernetzbare Kautschukmischung, insbesondere für die Seitenwand von Fahrzeugluftreifen, und einen Fahrzeugluftreifen, dessen Seitenwand zumindest zum Teil aus der mit Schwefel vernetzten Kautschukmischung besteht.

Es ist üblich, dass die Seitenwände eines Fahrzeugluftreifens auf einer Kautschukmischung basieren, die Ruß enthält. Dieser Rußanteil in den Seitenwänden bewirkt einen niedrigen elektrischen Widerstand der Seitenwand und stellt die Ableitung der beim Fahren auftretenden elektrostatischen Aufladungen von der Felge über die Seitenwände und Teile des Laufstreifens zur Fahrbahn hin sicher.

Die Reduzierung des Rollwiderstandes von Reifen gewinnt jedoch zunehmend an Bedeutung. Dabei ist es bekannt, den Reifen mit hysteresarmen und damit rollwiderstandsarmen Mischungen, insbesondere im Laufstreifen, zu versehen. Zu den Maßnahmen, die zur Verringerung des Rollwiderstandes einer Kautschukmischung eingesetzt werden, gehört die Verwendung gering aktiver Füllstoffe, die Verwendung einer geringen Menge an aktivem Füllstoff oder der Einsatz von Kieselsäure anstelle von Ruß als Füllstoff.

Aus der EP 1 419 195 B1 sind z. B. Laufstreifenmischungen bekannt, die zur Verbesserung der Reifeneigenschaften Kieselsäuren mit einer niedrigen spezifischen Oberfläche (low surface area) enthalten. Die BET-Oberfläche dieser Kieselsäuren ist kleiner als 130 m²/g.

Die vorgenannten Maßnahmen zur Reduzierung des Rollwiderstandes führen aber zu einer Erhöhung des elektrischen Widerstandes der Mischungen, so dass Alternativen zur Ladungsableitung im Reifen getroffen werden müssen.

Wird der Laufstreifen aus einer rollwiderstandsarmen und hoch mit Kieselsäure gefüllten Mischung hergestellt, ist es z. B. bekannt, einen sogenannten Carbon Center Beam aus einer hoch mit Ruß gefüllten Mischung in den Laufstreifen einzuarbeiten.

Um den Rollwiderstand von Reifen weiter zu reduzieren, geht man nun auch dazu über auch die Body-Mischungen des Reifens, also die Seitenwände oder die Gummierungsmischungen, rollwiderstandsarm auszulegen. Die Pfade zur Ableitung der elektrischen Ladung müssen dann über andere Wege als über die Seitenwandmischung oder Gummierungsmischungen erfolgen.

Um die Ladungsableitung in solch einem Fall sicher zu stellen, ist beispielsweise aus der DE 10 2010 037 004 A1 ein Fahrzeugluftreifen bekannt, dessen Seitenwände aus einem elektrisch nicht leitfähigen Gummimaterial bestehen. Die Seitenwände sind dabei von einem faden-, strang- oder bandartigen elektrisch leitfähigen Element spiralig umwickelt. Das elektrisch leitfähige Element ist ein metallisches Filament, ein aus solchen zusammengesetzter Cord oder ein aus einer elektrisch leitfähigen Kautschukmischung gefertigtes Band.

Der vorliegenden Erfindung liegt nun die Aufgabe zugrunde, eine schwefelvernetzbare Kautschukmischung bereitzustellen, die eine reduzierte Hysterese aufweist und damit beim Einsatz als Seitenwandmischung zu niedrigem Rollwiderstand führt.

Gelöst wird diese Aufgabe durch eine schwefelvernetzbare Kautschukmischung, enthaltend
- 20 bis 80 phr Naturkautschuk und/oder synthetisches Polyisopren,
- 20 bis 80 phr zumindest eines für die Anbindung an Kieselsäure funktionalisierten Polybutadiens, welches mit einem Silansulfid endgruppenmodifiziert ist, und
- 20 bis 50 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g.

Überraschenderweise weist die erfindungsgemäße Kautschukmischung durch die spezielle Kombination der Bestandteile in den angegebenen Mengen eine deutlich reduzierte Hysterese auf, was beim Einsatz im Reifen zu einem reduzierten Rollwiderstand führt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Die erfindungsgemäße Kautschukmischung enthält 20 bis 80 phr Naturkautschuk und/oder synthetisches Polyisopren. Bei synthetischem Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Ein solches Polyisopren kann durch stereospezifische Polymerisation in Lösung mit Ziegler-Natta-Katalysatoren oder unter Verwendung von fein verteilten Lithiumalkylen erhalten werden. Bei Naturkautschuk (NR) handelt es sich ebenfalls um ein solches cis-1,4 Polyisopren; der cis-1,4-Anteil im Naturkautschuk ist größer 99 Gew.-%.
Ferner ist auch ein Gemisch aus Naturkautschuk mit einem oder mehreren synthetischen Polyisoprenen denkbar.

Die Kautschukmischung enthält ferner 20 bis 80 phr zumindest eines für die Anbindung an Kieselsäure funktionalisierten Polybutadiens. Bei dem Polybutadien kann es sich um alle dem Fachmann bekannten Typen mit einem M_{w} von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. High-cis Polybutadien kann z. B. mit Neodym als Katalysator hergestellt werden und bewirkt eine niedrige Hysterese der Kautschukmischung. Das Polybutadien ist für die Anbindung an Kieselsäure funktionalisiert, d. h. es weist eine Gruppe auf, die über polare Gruppe eine Anbindung an die polaren Gruppen der Kieselsäure erlaubt.

Das Polybutadien kann entlang der Polymerkette mit solchen Gruppen funktionalisiert sein. Besonders vorteilhaft ist es allerdings, wenn das Polybutadien an den Polymerenden mit solchen Gruppen modifiziert ist.

Vorzugsweise ist das Polybutadien mit einem Silansulfid endgruppenmodifiziert. Mit einer solchen Modifizierung konnten die besten Ergebnisse hinsichtlich der Hysteresereduzierung erzielt werden. Derartige Polybutadiene sind z. B. solche, die mit Silansulfiden der folgenden Struktur endgruppenmodifiziert sind:

(RO)ₓ(R)_{y}Si-R'-S-SiR₃

wobei Si Silicium, S Schwefel und O Sauerstoff bedeuten,
x ausgewählt ist aus 1,2 und 3 und y ausgewählt ist aus 0, 1 und 2 mit x+y=3,
R gleich oder verschieden sind und ausgewählt sind aus C₁- bisC₁₆-Alkylresten und
R' ausgewählt ist aus Aryl-, Alkylaryl- und C₁- bisC₁₆-Alkylresten.
Solche Polybutadiene und deren Herstellung werden beispielsweise in der WO 2007/047943 A2 beschrieben.

Gemäß einer vorteilhaften Weiterbildung der Erfindung enthält die Kautschukmischung 20 bis 60 phr Naturkautschuk und/oder synthetisches Polyisopren und 40 bis 80 phr zumindest eines für die Anbindung an Kieselsäure funktionalisierten Polybutadiens. Mit diesen Anteilen konnten besonders gute Rollwiderstandswerte im Reifen erzielt werden, wobei die anderen Reifeneigenschaften auf gutem Niveau verbleiben.

Die Kautschukmischung kann auch noch weitere Dienkautschuke bis zu einer Menge von maximal 10 phr enthalten. Als Dienkautschuke werden dabei Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Die weiteren Dienkautschuke sind beispielsweise Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder NitrilKautschuk und/oder Chloropren-Kautschuk und/oder Acrylat-Kautschuk und/oder FluorKautschuk und/oder Silikon-Kautschuk und/oder Polysulfid-Kautschuk und/oder Epichlorhydrin-Kautschuk und/oder Styrol-Isopren-Butadien-Terpolymer und/oder hydrierter Acrylnitrilbutadien-Kautschuk und/oder hydrierter Styrol-Butadien-Kautschuk.

Bevorzugt handelt es sich bei dem oder den weiteren Dienkautschuk(en) jedoch um Styrol-Butadien-Copolymere (SBR, Styrol-Butadien-Kautschuk), welche auch mit funktionellen Gruppen modifiziert sein können.

Die Kautschukmischung enthält 20 bis 50 phr zumindest einer Kieselsäure mit einer CTAB-Oberfläche (gemäß ASTM D 3765) von 50 bis 130 m²/g, vorzugsweise 70 bis 120 m²/g und einer Stickstoff-Oberfläche (BET-Oberfläche) (gemäß DIN ISO 9277 und DIN 66132) von 60 bis 140 m²/g, vorzugsweise 80 bis 125 m²/g. Diese Kieselsäuren werden auf Grund ihrer geringen spezifischen Oberfläche auch als "low surface area" Kieselsäuren bezeichnet. Es können auch mehrere Kieselsäuren mit einer derartigen Oberflächencharakteristik im Gemisch eingesetzt werden. Die Begriffe "Kieselsäure" und "Silika" werden im Rahmen der vorliegenden Erfindung, wie in der Fachwelt üblich, synonym verwendet. Zum Einsatz können z. B. Zeosil®1085 oder Zeosil®1115 der Firma Solvay, Frankreich kommen.

Um den Rollwiderstand beim Einsatz der Kautschukmischung in einer Seitenwand eines Fahrzeugluftreifens weiter zu reduzieren, hat es sich als vorteilhaft erweisen, wenn die Kautschukmischung 4 bis 11 phf zumindest eines geblockten und/oder ungeblockten Mercaptosilans enthält.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure bzw. die vorhandenen Kieselsäuren, das heißt, dass andere eventuell vorhandene Füllstoffe wie Ruß nicht in die Berechnung der Mercaptosilanmenge mit eingehen.

Die geblockten und/oder ungeblockten Mercaptosilane dienen als Silan-Kupplungsagenzien. Sie dienen in kieselsäurehaltigen Mischungen der Verbesserung der Verarbeitbarkeit und der Anbindung des polaren Füllstoffes an den Kautschuk. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Die Silan-Kupplungsagenzien können dabei auch als Gemisch mit Industrieruß zugesetzt werden. Verwendbar sind z. B. Mercaptosilane, die unter dem Namen NXT® in verschiedenen Varianten von der Firma Momentive, USA vertrieben werden. So genannte NXT® Silane werden von der Firma Momentive, USA in Kombination mit Kieselsäuren mit hoher spezifischer Oberfläche und funktionalisierten Polymeren vorgeschlagen, um eine einfache Verarbeitbarkeit von Hochleistungsmischungen zu erzielen.

Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie unten ausgeführt, Acylgruppen.

Der Ausdruck "geblocktes und/oder ungeblocktes Mercaptosilan" bedeutet, dass sowohl ein geblocktes als auch ein ungeblocktes als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel I) auf:

I) (R⁴)₃Si-Z-S-R⁵,

wobei die Reste R⁴ innerhalb eines Moleküls gleich oder verschieden voneinander sein können und Alkoxy-Gruppen mit 1 bis 10 Kohlenstoffatomen sind,
wobei R⁵ eine Acylgruppe mit 1 bis 20 Kohlenstoffatomen oder eine Wasserstoffatom ist, und
wobei Z eine Alkylgruppe mit 1 bis 10 Kohlenstoffatomen ist.
S ist die Abkürzung für Schwefel und Si für Silizium.

Geblockte Mercaptosilane tragen an dem Schwefelatom eine Schutzgruppe, in dem vorliegenden Fall in Formel I) die Gruppe R⁵, weshalb sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel I) alle Reste R⁴ Ethoxy (OEt) sind, Z eine Propylgruppe und R⁵ eine Octanoylgruppe ist. Mit diesem Mercaptosilan konnten besonders gute Ergebnisse hinsichtlich des Verarbeitungsverhaltens und den Reifeneigenschaften erzielt werden.

Neben den bereits ausführlich erläuterten, erfindungswesentlichen Bestandteilen, kann die Kautschukmischung weitere, in der Kautschukindustrie übliche Bestandteile enthalten. Derartige Bestandteile werden im Folgenden erläutert:
Die Kautschukmischung kann als weiteren Füllstoff Ruß in Mengen bis zu 10 phr enthalten. Es sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70°C) bei guten sonstigen Reifeneigenschaften erzielt.

Die erfindungsgemäße Kautschukmischung kann neben der "low surface area" Kieselsäure und Ruß noch weitere bekannte polare und/oder unpolare Füllstoffe, wie weitere Kieselsäuren, Alumosilicate, Kreide, Stärke, Magnesiumoxid, Titandioxid oder Kautschukgele, enthalten. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar.

Auch Graphit und Graphene sowie sogenannte "carbon-silica dual-phase filler" sind als Füllstoff denkbar.

Zinkoxid gehört im Rahmen der vorliegenden Erfindung nicht zu den Füllstoffen.

Die erfindungsgemäße Kautschukmischung kann andere im Stand der Technik bekannte Silane enthalten, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik). Bevorzugt enthält sie jedoch außer dem Mercaptosilan kein weiteres Silan, d. h. sie ist bevorzugt frei von weiteren Silanen wie TESPD (3,3'-Bis(triethoxysilylpropyl)disulfid) oder TESPT (3,3'-Bis(triethoxysilylpropyl)tetrasulfid) oder Octyltriethoxysilane (z. B. Si208®, Fa. Evonik).

In der Kautschukmischung können Weichmacher in Mengen von 1 bis 50 phr enthalten sein. Geringe Mengen an Weichmacher werden im Wesentlichen im Hinblick auf eine besonders gute Prozessierbarkeit der Kautschukmischung, insbesondere der Extrudate vor der Vernetzung, zugesetzt, während hohe Mengen an Weichmacher im PKW-Reifenbereich zur Einstellung der Mischungshärte dienen.

Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N,N'-Di-(1,4-dimethylpentyl)-p-phenylen-diamin (77PD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z. B. Fettsäuresalze, wie z. B. Zinkseifen, und
Fettsäureester und deren Derivate.

Der Mengenanteil der Gesamtmenge an weiteren Zusatzstoffen beträgt 3 bis 100 phr, bevorzugt 5 bis 80 phr.

Im Gesamtmengenanteil der weiteren Zusatzstoffe finden sich auch 0,1 bis 10 phr, bevorzugt 1 bis 8 phr, besonders bevorzugt 1,5 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es können aber auch Zinkoxide mit einer BET-Oberfläche von 10 bis 100 m²/g, wie z. B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z. B. Cobalt-Salze und Verstärkerhärze (z. B. Resorcin-HMMM/HMT) enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder Diphenylguanidin (DPG).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpol ysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, sowie die oben genannten Systeme Vulkuren®, Duralink® und Perkalink® begrifflich als Vulkanisationsmittel zusammengefasst.

Der erfindungsgemäßen Kautschukmischung wird bei deren Herstellung bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugluftreifen, herstellen.

Die Begriffe "vulkanisiert" und "vernetzt" werden im Rahmen der vorliegenden Erfindung synonym verwendet.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für verschiedene Gummiartikel eingesetzt werden.

Vorzugsweise findet die Kautschukmischung jedoch Anwendung als Seitenwand in Fahrzeugluftreifen, wobei darunter Fahrzeugluftreifen für Industrie- und Baustellenfahrzeuge, LKW-, PKW- sowie Zweiradreifen zu verstehen sind.

Einen Fahrzeugluftreifen mit verbessertem Rollwiderstand erhält man, wenn die Seitenwand zumindest zum Teil aus der mit Schwefel vernetzten Kautschukmischung besteht.

Zur Verwendung als Seitenwand in Fahrzeugluftreifen wird die Mischung als Fertigmischung vor der Vulkanisation in die Form einer Seitenwand gebracht und bei der Herstellung des Fahrzeugreifenrohlings wie bekannt aufgebracht. Die Seitenwand kann aber auch in Form eines schmalen Kautschukmischungsstreifens auf einen Reifenrohling aufgewickelt werden.

Die Erfindung soll nun anhand von Vergleichs- und Ausführungsbeispielen, die in der Tabellen 1 zusammengefasst sind, näher erläutert werden.

Die Vergleichsmischungen sind dabei mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120°C gemischt wurde.

Aus sämtlichen Mischungen wurden Prüfkörper durch Vulkanisation über 20 min unter Druck bei 160°C hergestellt und mit diesen Prüfkörpern für die Kautschukindustrie übliche Materialeigenschaften mit den im Folgenden angegebenen Testverfahren ermittelt.
- Shore-A-Härte bei Raumtemperatur (RT) und 70°C gemäß DIN ISO 7619-1
- Rückprallelastizität (Rückpr.) bei Raumtemperatur und 70°C gemäß DIN 53 512
- Spannungswert bei 300% Dehnung bei Raumtemperatur gemäß DIN 53 504
- dynamischer Speichermodul E' bei 55°C aus dynamisch-mechanischer Messung gemäß DIN 53 513, Dehnungsdurchlauf (engl. "strain sweep") bei 0,15 % sowie 8% Dehnung
- maximaler (max) Verlustfaktor tan δ (tangens delta) aus dynamisch-mechanischer Messung bei 55°C gemäß DIN 53 513, Dehnungsdurchlauf (engl. "strain sweep")

**Tabelle 1**

| **Bestandteile** | **Einheit** | **1(V)** | **2(V)** | **3(V)** | **4(E)** | **5(E)** |
|---|---|---|---|---|---|---|
| Naturkautschuk | phr | 30 | 70 | 30 | 30 | 30 |
| BR 1^{a} | phr | 70 | 30 | - | - | - |
| BR 2^{b} | phr | - | - | 70 | 70 | 70 |
| Kieselsäure A^{c} | phr | 35 | 35 | 35 | - | - |
| Kieselsäure B^{d} | phr | - | - | - | 35 | 35 |
| Silan-Kupplungsagens^{e} | phr | 2,5 | 2,5 | 2,5 | 1,4 | - |
| gebl. Mercaptosilan^{f} | phr | - | - | - | - | 2,0 |
| Weichmacher, Alterungsschutzmittel, Ozonschutzwachs | phr | 22,5 | 22,5 | 22,5 | 22,5 | 22,5 |
| Vulkanisationshilfsmittel | phr | 4 | 4 | 4 | 4 | 4 |
| Schwefel, Sulfenamid- und Gaunidinbeschleuniger | phr | 4,3 | 4,3 | 4,3 | 4,3 | 4,3 |

| **Eigenschaften** | | | | | | |
|---|---|---|---|---|---|---|
| Shore A-Härte bei RT | ShoreA | 50,8 | 45,55 | 51,05 | 52,35 | 51,7 |
| Shore A-Härte bei 70°C | ShoreA | 48,9 | 42,65 | 49, | 51,25 | 50,45 |
| Rückprallelast. bei RT | % | 65,19 | 61,83 | 70,65 | 73,01 | 72,45 |
| Rückprallelast. 70°C | % | 68,8 | 70,25 | 1,2 | 77,625 | 78,035 |
| Spannungswert 300 % | MPa | 3,201 | 3,191 | 3,589 | 4,137 | 4,031 |
| E' (bei 55°C, 0,15 % Dehnung) | MPa | 4,73 | 3,49 | 4,64 | 4,38 | 4,24 |
| E' (bei 55 °C, 8 % Dehnung) | MPa | 4,15 | 3,12 | 4,39 | 4,15 | 4,04 |
| max. tan δ bei 55°C | - | 0,0747 | 0,0736 | 0,0716 | 0,0433 | 0,0443 |

| | | | | | | |
|---|---|---|---|---|---|---|
| ^{a)} Nd-Polybutadienkautschuk ^{b)} für die Anbindung an Kieselsäure mit Silansulfid endgruppen-funktionalisiertes Polybutadien mit einem Funktionalisierungsgrad von 80 bis 100 %, 0 % Styrolgehalt, 10 % Vinylgehalt, T_{g} = -95 °C ^{c)} Ultrasil® VN 3 GR, CTAB 167 m²/g, BET 180 m²/g, Fa. Evonik Industries ^{d)} Zeosil® 1085 GR, CTAB 80 m²/g, BET 90 m²/g, Fa. Solvay ^{e)} S₂-Silan: TESPD ^{f)} geblocktes Mercaptosilan: 3-(Octanoylthio)-1-Propyl-Triethoxysilan, Fa. Momentive | | | | | | |

Aus der Tabelle 1 wird ersichtlich, dass nur die Mischungen 4(E) und 5(E) mit der speziellen Kombination der Polymere mit der speziellen Kieselsäure zu deutlich reduzierter Hysterese (kleine tan δ-Werte, große Rückprallelastizitäten bei 70°C) führen. Dieser Effekt ist durch den alleinigen Einsatz des Polymers BR 2, wie in Mischung 3(V) dargestellt, nicht erreichbar. Kleinere tan δ-Werte und größere Rückprallelastizitäten bei 70°C korrelieren beim Einsatz als Seitenwandmischung in Fahrzeugluftreifen mit einem reduzierten Rollwiderstand.

Die Rückprallelastizität bei 70°C lässt sich im Hinblick auf eine weitere Reduzierung des Rollwiderstandes weiter erhöhen, in dem ein Mercaptosilan in der Mischung eingesetzt wird (s. 5(E)).

## Patentansprüche

1. Fahrzeugluftreifen, dessen Seitenwand zumindest zum Teil aus einer mit Schwefel vernetzten Kautschukmischung, enthaltend
- 20 bis 80 phr Naturkautschuk und/oder synthetisches Polyisopren,
- 20 bis 80 phr zumindest eines für die Anbindung an Kieselsäure funktionalisierten Polybutadiens, welches mit einem Silansulfid endgruppenmodifiziert ist, und
- 20 bis 50 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g,
besteht.

2. Fahrzeugluftreifen nach Anspruch 1, **dadurch gekennzeichnet, dass** die Kautschukmischung 20 bis 60 phr Naturkautschuk und/oder synthetisches Polyisopren und 40 bis 80 phr zumindest eines für die Anbindung an Kieselsäure funktionalisierten Polybutadiens enthält.

3. Fahrzeugluftreifen nach Anspruch 1 oder 2, **dadurch gekennzeichnet, dass** die Kieselsäure eine CTAB-Oberfläche (gemäß ASTM D 3765) von 70 bis 120 m²/g und einer Stickstoff-Oberfläche (BET-Oberfläche) (gemäß DIN ISO 9277 und DIN 66132) von 80 bis 125 m²/g aufweist.

4. Fahrzeugluftreifen nach zumindest einem der vorhergehenden Ansprüche, **dadurch gekennzeichnet, dass** die Kautschukmischung 4 bis 11 phf zumindest eines geblockten und/oder ungeblockten Mercaptosilans enthält.

5. Fahrzeugluftreifen nach Anspruch 4, **dadurch gekennzeichnet, dass** das geblockte und/oder ungeblockte Mercaptosilan die allgemeine Summenformel I) aufweist:
I) (R⁴)₃Si-Z-S-R⁵,
wobei die Reste R⁴ innerhalb eines Moleküls gleich oder verschieden voneinander sein können und Alkoxy-Gruppen mit 1 bis 10 Kohlenstoffatomen sind, und
wobei R⁵ eine Acylgruppe mit 1 bis 20 Kohlenstoffatomen oder ein Wasserstoffatom ist, und
wobei Z eine Alkylgruppe mit 1 bis 10 Kohlenstoffatomen ist.

6. Fahrzeugluftreifen nach Anspruch 5, **dadurch gekennzeichnet, dass** es sich bei dem Mercaptosilan um das geblockte Mercaptosilan 3-Octanoylthio-1-propyltriethoxysilan handelt.

7. Fahrzeugluftreifen nach zumindest einem der vorhergehenden Ansprüche, **dadurch gekennzeichnet, dass** die Kautschukmischung weniger als 10 phr zumindest eines Rußes enthält.

## Claims

1. Pneumatic vehicle tire wherein the sidewall consists at least partly of a sulfur-crosslinked rubber mixture comprising
- 20 to 80 phr of natural rubber and/or synthetic polyisoprene,
- 20 to 80 phr of at least one polybutadiene functionalized for attachment to silica and end group-modified with a silane sulfide, and
- 20 to 50 phr of at least one silica with a CTAB surface area (to ASTM D 3765) of 50 to 130 m²/g and a nitrogen surface area (BET surface area) (to DIN ISO 9277 and DIN 66132) of 60 to 140 m²/g.

2. Pneumatic vehicle tire according to Claim 1, **characterized in that** the rubber mixture comprises 20 to 60 phr of natural rubber and/or synthetic polyisoprene and 40 to 80 phr of at least one polybutadiene functionalized for attachment to silica.

3. Pneumatic vehicle tire according to Claim 1 or 2, **characterized in that** the silica has a CTAB surface area (to ASTM D 3765) of 70 to 120 m²/g and a nitrogen surface area (BET surface area) (to DIN ISO 9277 and DIN 66132) of 80 to 125 m²/g.

4. Pneumatic vehicle tire according to at least one of the preceding claims, **characterized in that** the rubber mixture contains 4 to 11 phf of at least one blocked and/or unblocked mercaptosilane.

5. Pneumatic vehicle tire according to Claim 4, **characterized in that** the blocked and/or unblocked mercaptosilane has the general empirical formula I):
I) (R⁴)₃Si-Z-S-R⁵
where the radicals R⁴ may be identical to or different from one another within one molecule, and are alkoxy groups having 1 to 10 carbon atoms, and
where R⁵ is an acyl group having 1 to 20 carbon atoms or is a hydrogen atom, and
where Z is an alkyl group having 1 to 10 carbon atoms.

6. Pneumatic vehicle tire according to Claim 5, **characterized in that** the mercaptosilane is the blocked mercaptosilane 3-octanoylthio-1-propyltriethoxysilane.

7. Pneumatic vehicle tire according to at least one of the preceding claims, **characterized in that** the rubber mixture contains less than 10 phr of at least one carbon black.

## Revendications

1. Pneumatique pour véhicule dont la paroi latérale est constituée au moins en partie par un mélange de caoutchouc réticulé par du soufre, contenant
- 20 à 80 pcr (parties pour cent parties de caoutchouc) de caoutchouc naturel et/ou de polyisoprène synthétique,
- 20 à 80 pcr d'au moins un polybutadiène qui est fonctionnalisé pour la liaison sur de la silice et qui est modifié au niveau des groupes terminaux par un sulfure de silane et
- 20 à 50 pcr d'au moins une silice qui présente une surface CTAB (selon la norme ASTM D 3765) de 50 à 130 m²/g et une surface d'azote (surface BET) (selon les normes DIN ISO 9277 et DIN 66132) de 60 à 140 m²/g.

2. Pneumatique pour véhicule selon la revendication 1, **caractérisé en ce que** le mélange de caoutchouc contient 20 à 60 pcr de caoutchouc naturel et/ou de polyisoprène synthétique et 40 à 80 pcr d'au moins un polybutadiène qui est fonctionnalisé pour la liaison sur de la silice.

3. Pneumatique pour véhicule selon la revendication 1 ou 2, **caractérisé en ce que** la silice présente une surface CTAB (selon la norme ASTM D 3765) de 70 à 120 m²/g et une surface d'azote (surface BET) (selon les normes DIN ISO 9277 et DIN 66132) de 80 à 125 m²/g.

4. Pneumatique pour véhicule selon au moins l'une quelconque des revendications précédentes, **caractérisé en ce que** le mélange de caoutchouc contient 4 à 11 pcf (parties pour cent parties de charge) d'au moins un mercaptosilane bloqué et/ou non bloqué.

5. Pneumatique pour véhicule selon la revendication 4, **caractérisé en ce que** le mercaptosilane bloqué et/ou non bloqué présente la formule brute générale I) :
I) (R⁴)₃Si-Z-S-R⁵
les radicaux R⁴ au sein d'une molécule pouvant être identiques ou différents les uns des autres et représentant des groupes alcoxy comprenant 1 à 10 atomes de carbone et
R⁵ signifiant un radical acyle comprenant 1 à 20 atomes de carbone ou un atome d'hydrogène et
Z représentant un groupe alkyle comprenant 1 à 10 atomes de carbone.

6. Pneumatique pour véhicule selon la revendication 5, **caractérisé en ce qu'**il s'agit, pour le mercaptosilane, du mercaptosilane bloqué 3-octanoylthio-1-propyltriéthoxysilane.

7. Pneumatique pour véhicule selon au moins l'une quelconque des revendications précédentes, **caractérisé en ce que** le mélange de caoutchoucs contient moins de 10 pcr d'au moins une suie.
